# EUROPEAN PATENT APPLICATION

(11) **EP 4 726 718 A1**
(43) Date of publication of application: **15.04.2026**
(21) Application number: 25206969.5
(22) Date of filing: 06.10.2025
(51) Int. Cl.: G10L 21/0208

(54) **TRANSFORMATION OF MICROPHONE DATA INTO ACCELEROMETER DATA**

(30) Priority: 10.10.2024 US 202418912532
(71) Applicant: Invensense, Inc., San Jose, California 95110 (US)
(72) Inventor: PONÇOT, Rémi Louis Clément, San Jose (US)
(74) Representative: St Clair Jones, Gregory Arthur Langley

(57) **Abstract**

In a method for transforming microphone data into accelerometer data, the microphone data is received. A device-specific filter is applied to the microphone data to generate first data, the device-specific filter for transforming microphone first data according to characteristics of a device. The first data is augmented by adding sensor noise to the first data to generate second data, the sensor noise characterizing noise intrinsic to the device. The second data is augmented by adding environmental vibration noise to generate the accelerometer data, the environmental vibration noise defining an environment within which use of the device is simulated.

## Description

### BACKGROUND

Mobile electronic devices often have limited resources for computing ability, so it is beneficial to design systems within the mobile device to be efficient. Furthermore, in training a mobile electronic device to perform automatic classification using machine learning, such as to perform keyword spotting (KWS), large volumes of data are required as source data to perform the training. Often, such volumes of data are not easily obtainable. As such, training models for use in mobile electronic devices may be limited due to constraints on the amount of available data.

### BRIEF DESCRIPTION OF DRAWINGS

The accompanying drawings, which are incorporated in and form a part of the Description of Embodiments, illustrate various non-limiting and non-exhaustive embodiments of the subject matter and, together with the Description of Embodiments, serve to explain principles of the subject matter discussed below. Unless specifically noted, the drawings referred to in this Brief Description of Drawings should be understood as not being drawn to scale and like reference numerals refer to like parts throughout the various figures unless otherwise specified.
FIG. 1 is a block diagram illustrating an example earbud placed within an ear canal, upon which embodiments described herein may be implemented.
FIG. 2 is a block diagram illustrating an example system for transforming microphone data into accelerometer data, in accordance with other embodiments.
FIG. 3 is a block diagram illustrating an example data transformer for transforming microphone data into accelerometer data, in accordance with embodiments.
FIG. 4 is a block diagram illustrating an example data transformer for transforming microphone data including speech into accelerometer data, in accordance with embodiments.
FIG. 5 is a block diagram illustrating an example computer system upon which embodiments of the present invention can be implemented.
FIG. 6 is a flow diagram illustrating an example method for transforming microphone data into accelerometer data, according to embodiments.
FIG. 7 is a flow diagram illustrating an example method for transforming microphone data including speech into accelerometer data, according to other embodiments.

### DETAILED DESCRIPTION

The following Description of Embodiments is merely provided by way of example and not of limitation. Furthermore, there is no intention to be bound by any expressed or implied theory presented in the preceding background or in the following Description of Embodiments.

Reference will now be made in detail to various embodiments of the subject matter, examples of which are illustrated in the accompanying drawings. While various embodiments are discussed herein, it will be understood that they are not intended to limit to these embodiments. On the contrary, the presented embodiments are intended to cover alternatives, modifications and equivalents, which may be included within the spirit and scope the various embodiments as defined by the appended claims. Furthermore, in this Description of Embodiments, numerous specific details are set forth in order to provide a thorough understanding of embodiments of the present subject matter. However, embodiments may be practiced without these specific details. In other instances, well known methods, procedures, components, and circuits have not been described in detail as not to unnecessarily obscure aspects of the described embodiments.

### Notation and Nomenclature

Some portions of the detailed descriptions which follow are presented in terms of procedures, logic blocks, processing and other symbolic representations of operations on data within an electrical device. These descriptions and representations are the means used by those skilled in the data processing arts to most effectively convey the substance of their work to others skilled in the art. In the present application, a procedure, logic block, process, or the like, is conceived to be one or more self-consistent procedures or instructions leading to a desired result. The procedures are those requiring physical manipulations of physical quantities. Usually, although not necessarily, these quantities take the form of acoustic (e.g., ultrasonic) signals capable of being transmitted and received by an electronic device and/or electrical or magnetic signals capable of being stored, transferred, combined, compared, and otherwise manipulated in an electrical device.

It should be borne in mind, however, that all of these and similar terms are to be associated with the appropriate physical quantities and are merely convenient labels applied to these quantities. Unless specifically stated otherwise as apparent from the following discussions, it is appreciated that throughout the description of embodiments, discussions utilizing terms such as "receiving," "applying," "augmenting," "training," determining," "transforming," "deploying," "receiving," "identifying," "analyzing," "monitoring," "processing," "comparing," "generating," "outputting," or the like, refer to the actions and processes of an electronic device.

Embodiments described herein may be discussed in the general context of processor-executable instructions residing on some form of (optionally non-transitory) processor-readable medium, such as program modules, executed by one or more computers or other devices. Generally, program modules include routines, programs, objects, components, data structures, etc., that perform particular tasks or implement particular abstract data types. The functionality of the program modules may be combined or distributed as desired in various embodiments.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, logic, circuits, and steps have been described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Also, the example ultrasonic sensing system and/or mobile electronic device described herein may include components other than those shown, including well-known components.

Various techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a (optionally non-transitory) processor-readable storage medium comprising instructions that, when executed, perform one or more of the methods described herein. The (optionally non-transitory) processor-readable data storage medium may form part of a computer program product, which may include packaging materials.

The (optionally non-transitory) processor-readable storage medium may comprise random access memory (RAM) such as synchronous dynamic random access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

Various embodiments described herein may be executed by one or more processors, such as one or more motion processing units (MPUs), sensor processing units (SPUs), host processor(s) or core(s) thereof, digital signal processors (DSPs), general purpose microprocessors, application specific integrated circuits (ASICs), application specific instruction set processors (ASIPs), field programmable gate arrays (FPGAs), a programmable logic controller (PLC), a complex programmable logic device (CPLD), a discrete gate or transistor logic, discrete hardware components, or any combination thereof designed to perform the functions described herein, or other equivalent integrated or discrete logic circuitry. The term "processor," as used herein may refer to any of the foregoing structures or any other structure suitable for implementation of the techniques described herein. As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Moreover, processors can exploit nano-scale architectures such as, but not limited to, molecular and quantum-dot based transistors, switches and gates, in order to optimize space usage or enhance performance of user equipment. A processor may also be implemented as a combination of computing processing units.

In addition, in some aspects, the functionality described herein may be provided within dedicated software modules or hardware modules configured as described herein. Also, the techniques could be fully implemented in one or more circuits or logic elements. A general purpose processor may be a microprocessor, but in the alternative, the processor may be any conventional processor, controller, microcontroller, or state machine. A processor may also be implemented as a combination of computing devices, e.g., a combination of an SPU/MPU and a microprocessor, a plurality of microprocessors, one or more microprocessors in conjunction with an SPU core, MPU core, or any other such configuration.

### OVERVIEW OF DISCUSSION

Discussion begins with a description of an example earbud device including an accelerometer for receiving speech through vibrations carried through a user's bones. An example system for transforming microphone data into accelerometer data is then described. An example data transformer for transforming microphone data into accelerometer data is then described. An example data transformer for transforming microphone data including speech into accelerometer data is then described. Example operations of transforming microphone data into accelerometer data are then described.

Example embodiments described herein provide for generating a library of virtual accelerometer data from microphone data sources. Microphones are used for converting sound waves into electrical signals. In various use cases, these electrical signals can be monitored, processed, and or analyzed in the performance of different tasks. For example, microphone recorded electrical signals can be used for performing keyword spotting in wireless headphones or in-ear headphone devices (e.g., earbuds), such as true wireless stereo (TWS) devices. In another example, microphone recorded electrical signals can be used for performing Condition-Based Monitoring (CBM) for monitoring the health of various types of equipment and assets.

In the described examples, as well as other use cases, microphones are subjected to many sounds beyond those for which sound is recorded. For example, wireless headphone devices are often used in environments with ambient noise (e.g., wind, crowds, other people). Similarly, microphones placed within an environment for performing CBM may also record environmental noises. In general, the microphone may pick up noise, subjecting the recording to environmental or ambient noise, which impacts the ability to perform the desired task. For instance, a headphone device may not be able to accurately perform keyword spotting, or a microphone sensor may not be able to accurately perform CBM.

In order to address the impact of environmental or ambient noise to a microphone, a device including an accelerometer for receiving vibrations and converting the vibrations to electrical signals is utilized. Embodiments described herein provide accelerometer data generated from source microphone data for use in performing operations associated with the use of a device including an accelerometer, such as for performing keyword spotting or condition-based monitoring.

In accordance with one embodiment, a method for transforming microphone data into accelerometer data is provided. Microphone data is received. A phoneme filter is applied to the microphone data to generate first data, the phoneme filter for transforming the microphone data according to at least a phoneme. A device-specific filter is applied to the first data to generate second data, the device-specific filter for transforming the first data according to characteristics of a device. In one embodiment, the device is an in-ear microphone device. In one embodiment, the characteristics of the device are associated with contact between the device and an ear canal of a user. The second data is augmented by adding sensor noise to the second data to generate third data, the sensor noise characterizing noise intrinsic to the device. The third data is augmented by adding environmental vibration noise to generate the accelerometer data, the environmental vibration noise defining an environment within which use of the device is simulated.

In some embodiments, a phoneme filter selection, a device selection, an activity selection, and an environment selection are received for selecting the phoneme filter, the device-specific filter, the sensor noise, and the environmental vibration noise for generating the accelerometer data. In some embodiments, the microphone data is received from a repository of the microphone data comprising a plurality of instances of the microphone data, wherein an instance of the microphone data comprises a keyword. In some embodiments, receiving the microphone data includes receiving the plurality of instances of the microphone data from the repository of the microphone data, wherein the method is performed for each instance of the microphone data of the plurality of instances of the microphone data, such that a plurality of instances of the accelerometer data is generated. In some embodiments, a machine learning model is trained for use within a head-worn device comprising an accelerometer for sensing vibration data based on the plurality of instances of the accelerometer data.

In accordance with another embodiment, a method for transforming microphone data into accelerometer data is provided. The microphone data is received. A device-specific filter is applied to the microphone data to generate first data, the device-specific filter for transforming microphone first data according to characteristics of a device. In one embodiment, the characteristics of the device are associated with contact between the device and a second device upon which the device is placed. The first data is augmented by adding sensor noise to the first data to generate second data, the sensor noise characterizing noise intrinsic to the device. The second data is augmented by adding environmental vibration noise to generate the accelerometer data, the environmental vibration noise defining an environment within which use of the device is simulated.

In some embodiments, a device selection and an environment selection are received for selecting the device-specific filter, the sensor noise, and the environmental vibration noise for generating the accelerometer data. In some embodiments, the microphone data is received from a repository of the microphone data comprising a plurality of instances of the microphone data. In some embodiments, the plurality of instances of the microphone data is received from the repository of the microphone data, wherein the method is performed for each instance of the microphone data of the plurality of instances of the microphone data, such that a plurality of instances of the accelerometer data is generated.

### EXAMPLE SYSTEMS FOR TRANSFORMING MICROPHONE DATA INTO ACCELEROMETER DATA

Example embodiments described herein provide methods and systems for transforming microphone data into accelerometer data. In some embodiments, the described technology provides methods and systems for transforming microphone data including speech to accelerometer data. For example, such simulated accelerometer can be used for training a headphone device (e.g., earbuds or a True Wireless Stereo device) to perform keyword spotting on received accelerometer data. In other embodiments, the described technology provides methods and systems for transforming microphone data to accelerometer data. For example, such embodiments can be used for performing condition-based monitoring using received accelerometer data.

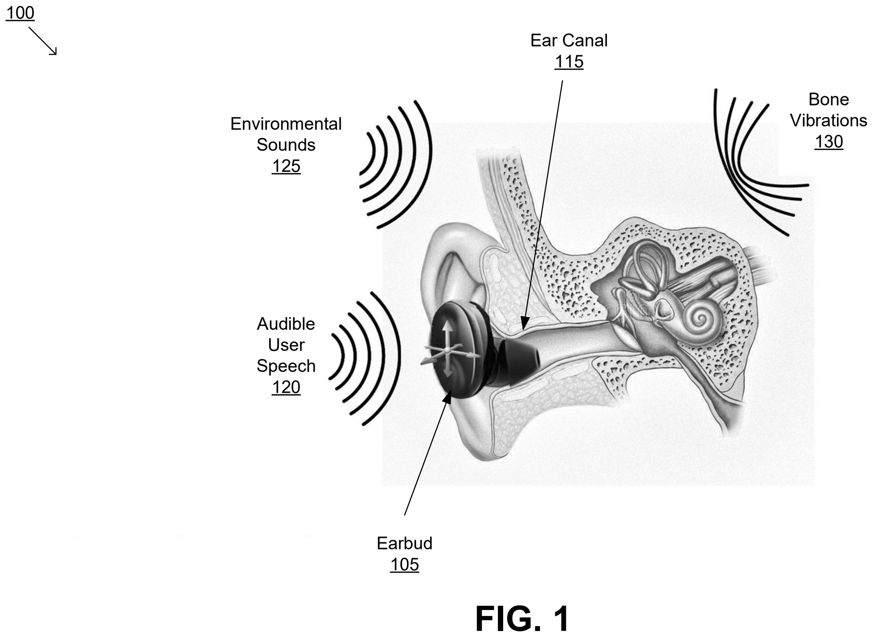

FIG. 1 is a block diagram illustrating an example use case 100 of an earbud 105 placed within an ear canal 115, upon which embodiments described herein may be implemented. As illustrated, earbud 105 is placed within ear canal 115 for supporting speech communication through an integrated speaker (not shown) which projects sound into ear canal 115. In accordance with various embodiments, earbud 105 includes at least one of a microphone (not shown) or an accelerometer (not shown).

In some embodiments, where earbud 105 includes a microphone, audible user speech 120 and environmental sounds 125 are received at the microphone, with internal componentry of earbud 105 converting audible user speech 120 and environmental sounds 125 into electrical signals for processing. It should be appreciated that environmental sounds 125 may include sounds such as wind, traffic noise, other speakers, and other noises in the environment in which the speaker is located. In some embodiments, earbud 105 is capable of performing keyword spotting for executing actions responsive to particular keywords uttered as audible user speech 120. Depending on the types and magnitude of environmental sounds 125, the resulting electrical signal may be impacted by the environmental sounds 125, and the execution of the keyword spotting may be compromised or difficult to perform.

In order to avoid the impact of environmental sounds 125 received at earbud 105, in other embodiments, an integrated accelerometer is used for receiving bone vibrations 130 corresponding to user speech that are carried through the user's bones and tissue and received at the accelerometer of earbud 105. Bone vibrations 130 received at an accelerometer that are carried through a user's bones and tissue are not subjected to environmental sounds 125, and user speech received via bone vibrations 130 is generally not impacted by environmental sounds 125.

In some embodiments described herein, a machine learning model is trained for use within a head-worn device (e.g., earbuds or TWS devices) including an accelerometer for sensing vibration data based on accelerometer data for use in keyword spotting. Training of such a machine learning model requires a substantial amount of source data. In order to facilitate such training, embodiments described herein provide systems and methods for transforming microphone data into accelerometer data for use in training, as microphone data is typically plentiful and easily accessible relative to accelerometer data.

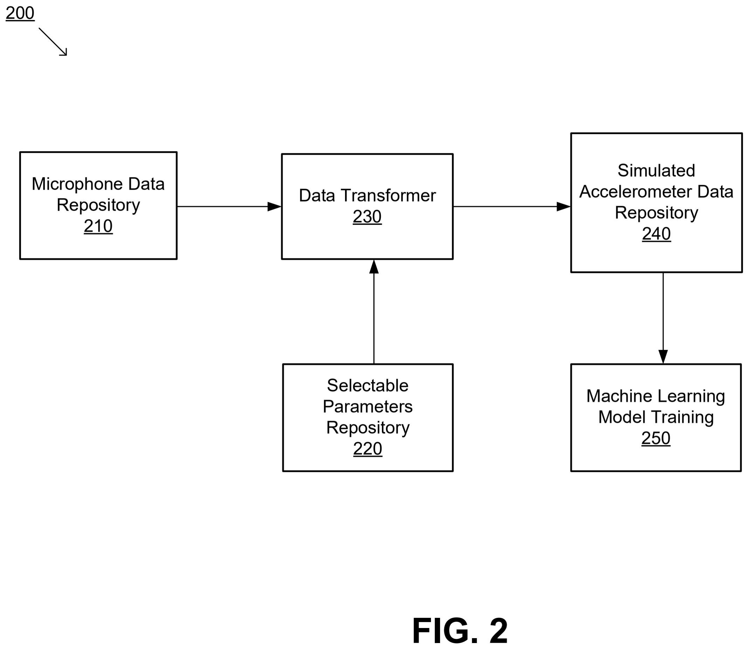

FIG. 2 is a block diagram illustrating an example system 200 for transforming microphone data into accelerometer data, in accordance with other embodiments.

System 200 is configured to transform microphone data into accelerometer data at data transformer 230. In accordance with various embodiments, system 200 includes microphone data repository 210, selectable parameters repository 220, data transformer 230, and simulated accelerometer data repository 240. In some embodiments, system 200 also includes machine learning training module 250. It should be appreciated that microphone data repository 210, selectable parameters repository 220, data transformer 230, and simulated accelerometer data repository 240, can be under the control of a single component of an enterprise computing environment (e.g., a distributed computer system or computer system 500) or can be distributed over multiple components (e.g., a virtualization infrastructure or a cloud-based infrastructure). In some embodiments, system 200 is comprised within or is an enterprise system.

Microphone data repository 210 includes multiple instances of microphone data that can include, without limitation, human speech and/or acoustic signals emitted by machines and systems. The instances of human speech can include microphone recorded keywords for use in automatic keyword spotting. The acoustic signals emitted by machines and systems can include microphone recorded sounds emitted by mechanical devices for use in condition-based monitoring. It should be appreciated that microphone data repository 210 can include a large library of microphone recorded sounds, as well as different versions or permutations of the sounds, such as human speech spoken by different genders, in different accents, with different intonations, etc.

Data transformer 230 is configured to receive instances of microphone data from microphone data repository 210 for transforming the microphone data into instances of simulated accelerometer data. In some embodiments, data transformer 230 accesses selectable parameters from selectable parameters repository 220 to perform the transformation into accelerometer data.

Selectable parameters repository 220 includes various selectable parameters, such as filters and data augmentation parameters to perform transformation into accelerometer data. For instance, selectable parameters repository 220 can include filters such as, and without limitation, phoneme filters and device-specific filters. A phoneme filter is used to transform the microphone data according to vowels and speech levels of a user. A device-specific filter is used to transform the microphone data according to characteristics of a device, where the characteristics are associated with the physical features of the device. In some embodiments, the characteristics of the device are associated with contact between the device and an ear canal of a user. It should be appreciated that selectable parameters repository 220 includes multiple instances of phoneme filters for simulating different speech patterns of different types of speakers and multiple instances of device-specific filters for simulating characteristics of different types of devices.

Selectable parameters repository 220 can also include data augmentations for augmenting microphone data, such as, and without limitation, sensor noise, environmental vibration noise, and user activity noise. Sensor noise characterizes noise intrinsic to a particular device. In some embodiments, the sensor noise is white noise. In some embodiments, the sensor noise augmentation is associated with a device-specific filter, such that if data transformer 230 applies a device-specific filter associated with a particular device, data transformer 230 will also apply the associated sensor noise augmentation for that device.

Environmental vibration noise defines sounds of an environment within which the use of the electronic device is simulated. For example, the environmental vibration sounds can include, without limitation, wind, road traffic, transportation noises, other speakers, machine noises, and other noises that may be within an environment. User activity noise defines sounds related to an activity of a user and can include, without limitation, walking, biking, eating, running, etc. It should be appreciated that any sound in an environment within which the electronic device can be used can be included within the environmental vibration noise and user activity noise for augmenting microphone data.

Data transformer 230 generates multiple instances of simulated accelerometer data, and stores the instances of simulated accelerometer data without simulated accelerometer data repository 240. It should be appreciated that data transformer 230 can generate multiple instances of simulated accelerometer data for each instance of microphone data received, but applying different combinations of filters and/or data augmentations.

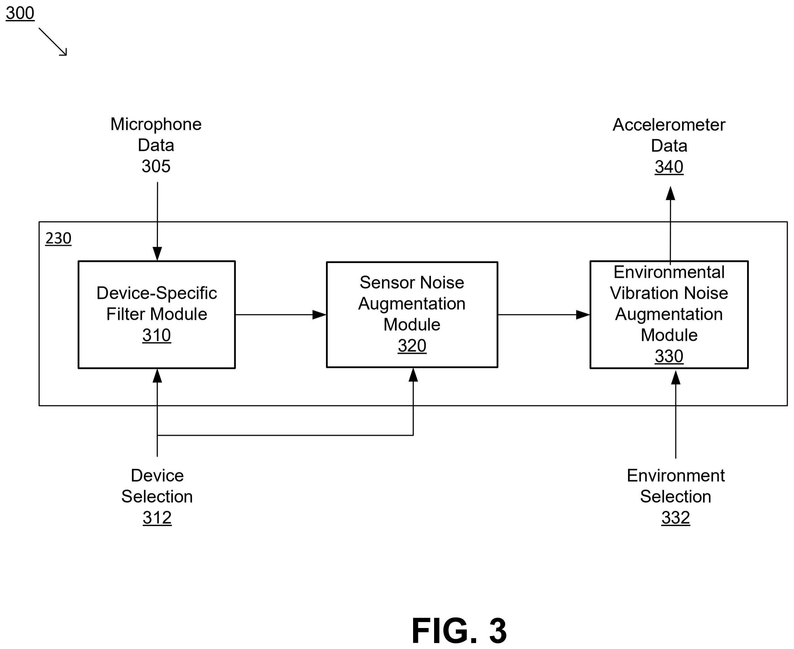

FIG. 3 is a block diagram illustrating a first example 300 of data transformer 230 for transforming microphone data into accelerometer data, in accordance with embodiments. In first example 300, data transformer 230 includes device-specific filter module 310, sensor noise augmentation module 320, and environmental vibration noise augmentation module 330. It should be appreciated that device-specific filter module 310, sensor noise augmentation module 320, and environmental vibration noise augmentation module 330, can be under the control of a single component of an enterprise computing environment (e.g., a distributed computer system or computer system 500) or can be distributed over multiple components (e.g., a virtualization infrastructure or a cloud-based infrastructure).

Instances of microphone data 305 are received at data transformer 230 for transformation into instances of accelerometer data 340. In accordance with various embodiments, the instances of microphone data 305 are transformed according to multiple instances of device selection 312 and environment selection 332. For example, each instance of microphone data 305 can be transformed according to device selection 312, where each transformation according device selection can be augmented by one or more environment selections 332. In some embodiments, microphone data 305 is received from microphone data repository 210 of FIG. 2.

Microphone data 305 is received at device-specific filter module 310 which is configured to apply a device-specific filter to microphone data 305 to generate first intermediate data. In some embodiments, the device-specific filter applied to microphone data 305 at device-specific filter module 310 is selected according to device selection 312. In some embodiments, the device-specific filter applied to microphone data 305 at device-specific filter module 310 is received from selectable parameters repository 220 of FIG. 2.

Sensor noise augmentation module 320 receives the first intermediate data from device-specific filter module 310 for augmenting the first intermediate data by adding sensor noise characterizing the noise intrinsic to a device to the first intermediate data, for generating second intermediate data. In some embodiments, the sensor noise applied to the first intermediate data at sensor noise augmentation module is selected according to device selection 312. In some embodiments, the sensor noise added to the first intermediate data at sensor noise augmentation module 320 is received from selectable parameters repository 220 of FIG. 2.

Environmental vibration noise augmentation module 330 receives the second intermediate data from sensor noise augmentation module 320 for augmenting the second intermediate data by adding environmental vibration noise defining an environment within which the use of the device is simulated to the second intermediate data, for generating accelerometer data 340. In some embodiments, the environmental vibration noise applied to the second intermediate data at environmental vibration noise augmentation module is selected according to environment selection 332. In some embodiments, the environmental vibration noise added to the second intermediate data at environmental vibration noise augmentation module 330 is received from selectable parameters repository 220 of FIG. 2.

In accordance with various embodiments, first example 300 of data transformer 230 may be utilized for transforming microphone data into accelerometer data for use in a device including an accelerometer for sensing vibrations for use in CBM. For instance, such a device can perform CBM by comparing sensed vibrations to accelerometer data stored within simulated accelerometer data repository 240.

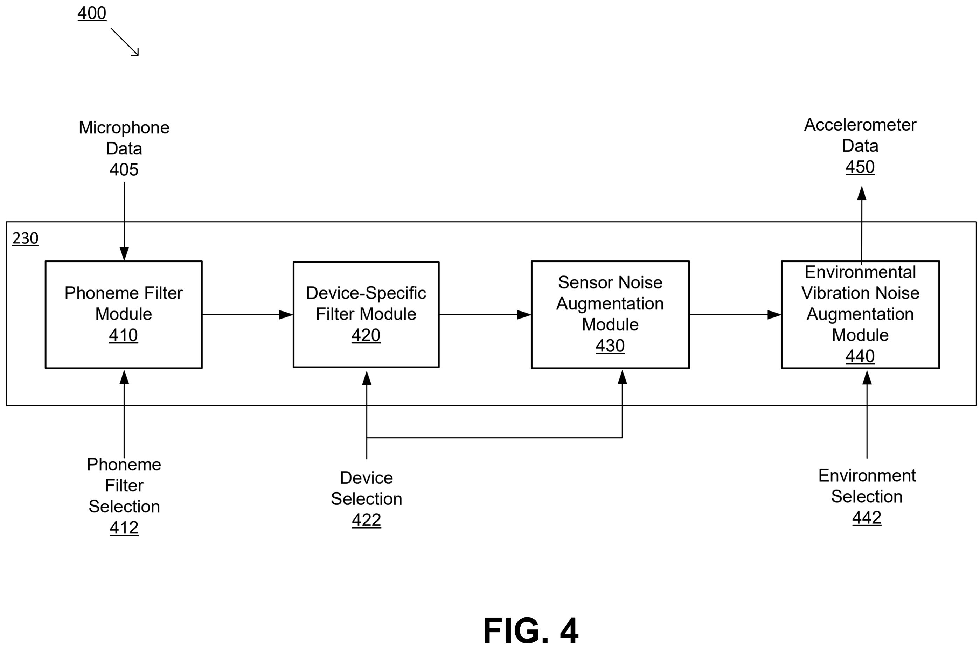

FIG. 4 is a block diagram illustrating a second example 400 of data transformer 230 for transforming microphone data including speech into accelerometer data, in accordance with embodiments. In second example 400, data transformer 230 includes phoneme filter module 410, device-specific filter module 420, sensor noise augmentation module 430, and environmental vibration noise augmentation module 440. It should be appreciated that phoneme filter module 410, device-specific filter module 420, sensor noise augmentation module 430, and environmental vibration noise augmentation module 440, can be under the control of a single component of an enterprise computing environment (e.g., a distributed computer system or computer system 500) or can be distributed over multiple components (e.g., a virtualization infrastructure or a cloud-based infrastructure).

Instances of microphone data 405 are received at data transformer 230 for transformation into instances of accelerometer data 450. In accordance with various embodiments, the instances of microphone data 405 are transformed according to multiple instances of phoneme filter selection 412, device selection 422 and environment selection 442. For example, each instance of microphone data 405 can be transformed according to phoneme filter selection 412, where each transformation according phoneme filter can be transformed according to one or more device selections 422, where each transformation according device selection can be augmented by one or more environment selections 442. In some embodiments, microphone data 405 is received from microphone data repository 210 of FIG. 2.

Microphone data 405 is received at phoneme filter module 410 which is configured to apply a phoneme filter to microphone data 405 to generate first intermediate data. In some embodiments, the phoneme filter applied to microphone data 405 at phoneme filter module 410 is selected according to phoneme filter selection 412. In some embodiments, the device-specific filter applied to microphone data 405 at phoneme filter module 410 is received from selectable parameters repository 220 of FIG. 2.

Device-specific filter module 420 receives the first intermediate data from phoneme filter module 410 which is configured to apply a device-specific filter to the first intermediate data to generate second intermediate data. In some embodiments, the device-specific filter applied to the first intermediate data at device-specific filter module 420 is selected according to device selection 422. In some embodiments, the device-specific filter applied to the first intermediate data at device-specific filter module 420 is received from selectable parameters repository 220 of FIG. 2.

Sensor noise augmentation module 430 receives the second intermediate data from device-specific filter module 420 for augmenting the second intermediate data by adding sensor noise characterizing the noise intrinsic to a device to the second intermediate data, for generating third intermediate data. In some embodiments, the sensor noise applied to the second intermediate data at sensor noise augmentation module is selected according to phoneme filter selection 412. In some embodiments, the sensor noise added to the second intermediate data at sensor noise augmentation module 430 is received from selectable parameters repository 220 of FIG. 2.

Environmental vibration noise augmentation module 440 receives the third intermediate data from sensor noise augmentation module 430 for augmenting the third intermediate data by adding environmental vibration noise defining an environment within which the use of the device is simulated to the third intermediate data, for generating accelerometer data 450. In some embodiments, the environmental vibration noise applied to the third intermediate data at environmental vibration noise augmentation module is selected according to environment selection 442. In some embodiments, the environmental vibration noise added to the second intermediate data at environmental vibration noise augmentation module 440 is received from selectable parameters repository 220 of FIG. 2.

In accordance with various embodiments, second example 400 of data transformer 230 may be utilized for transforming microphone data into accelerometer data for use in a headphone device, such as earbuds or a TWS device, including an accelerometer for sensing vibrations for use in keyword spotting. For instance, a machine learning model can be trained for spotting keywords according to the accelerometer data stored within simulated accelerometer data repository 240 (e.g., at machine learning training module 250 of FIG. 2).

### EXAMPLE COMPUTER SYSTEM

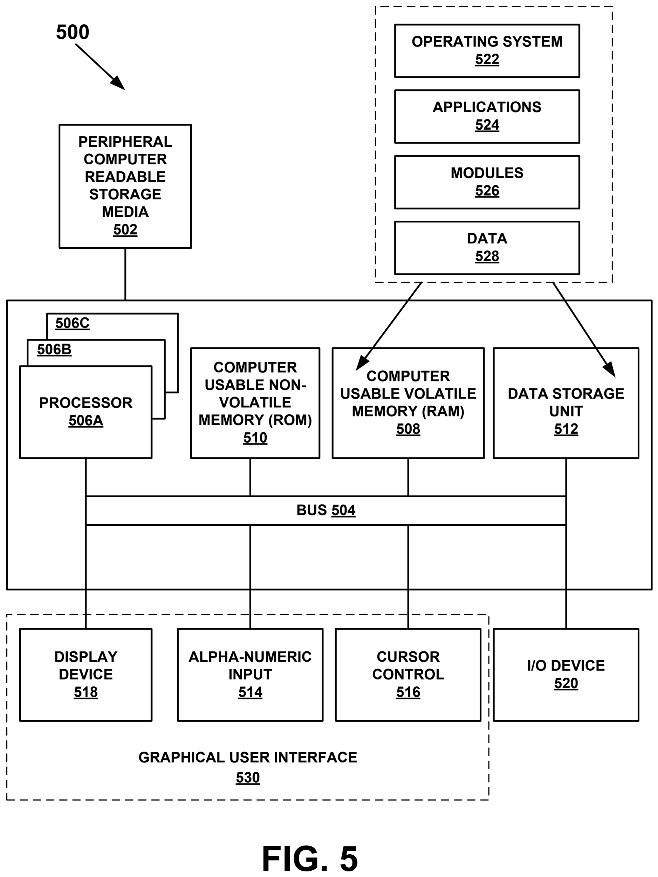

FIG. 5 is a block diagram of an example computer system 500 upon which embodiments of the present invention can be implemented. FIG. 5 illustrates one example of a type of computer system 500 (e.g., a computer system) that can be used in accordance with or to implement various embodiments which are discussed herein.

It is appreciated that computer system 500 of FIG. 5 is only an example and that embodiments as described herein can operate on or within a number of different computer systems including, but not limited to, general purpose networked computer systems, embedded computer systems, mobile electronic devices, smart phones, server devices, client devices, various intermediate devices/nodes, standalone computer systems, media centers, handheld computer systems, multi-media devices, and the like. In some embodiments, computer system 500 of FIG. 5 is well adapted to having peripheral tangible computer-readable storage media 502 such as, for example, an electronic flash memory data storage device, a floppy disc, a compact disc, digital versatile disc, other disc based storage, universal serial bus "thumb" drive, removable memory card, and the like coupled thereto. The tangible computer-readable storage media is optionally non-transitory in nature.

Computer system 500 of FIG. 5 includes an address/data bus 504 for communicating information, and a processor 506A coupled with bus 504 for processing information and instructions. As depicted in FIG. 5, computer system 500 is also well suited to a multi-processor environment in which a plurality of processors 506A, 506B, and 506C are present. Conversely, computer system 500 is also well suited to having a single processor such as, for example, processor 506A. Processors 506A, 506B, and 506C may be any of various types of microprocessors. Computer system 500 also includes data storage features such as a computer usable volatile memory 508, e.g., random access memory (RAM), coupled with bus 504 for storing information and instructions for processors 506A, 506B, and 506C. Computer system 500 also includes computer usable non-volatile memory 510, e.g., read only memory (ROM), coupled with bus 504 for storing static information and instructions for processors 506A, 506B, and 506C. Also present in computer system 500 is a data storage unit 512 (e.g., a magnetic or optical disc and disc drive) coupled with bus 504 for storing information and instructions. Computer system 500 also includes an alphanumeric input device 514 including alphanumeric and function keys coupled with bus 504 for communicating information and command selections to processor 506A or processors 506A, 506B, and 506C. Computer system 500 also includes a cursor control device 516 coupled with bus 504 for communicating user input information and command selections to processor 506A or processors 506A, 506B, and 506C. In one embodiment, computer system 500 also includes a display device 518 coupled with bus 504 for displaying information.

Referring still to FIG. 5, display device 518 of FIG. 5 may be a liquid crystal device (LCD), light emitting diode display (LED) device, cathode ray tube (CRT), plasma display device, a touch screen device, or other display device suitable for creating graphic images and alphanumeric characters recognizable to a user. Cursor control device 516 allows the computer user to dynamically signal the movement of a visible symbol (cursor) on a display screen of display device 518 and indicate user selections of selectable items displayed on display device 518. Many implementations of cursor control device 516 are known in the art including a trackball, mouse, touch pad, touch screen, joystick or special keys on alphanumeric input device 514 capable of signaling movement of a given direction or manner of displacement. Alternatively, it will be appreciated that a cursor can be directed and/or activated via input from alphanumeric input device 514 using special keys and key sequence commands. Computer system 500 is also well suited to having a cursor directed by other means such as, for example, voice commands. In various embodiments, alphanumeric input device 514, cursor control device 516, and display device 518, or any combination thereof (e.g., user interface selection devices), may collectively operate to provide a graphical user interface (GUI) 530 under the direction of a processor (e.g., processor 506A or processors 506A, 506B, and 506C). GUI 530 allows user to interact with computer system 500 through graphical representations presented on display device 518 by interacting with alphanumeric input device 514 and/or cursor control device 516.

Computer system 500 also includes an I/O device 520 for coupling computer system 500 with external entities. For example, in one embodiment, I/O device 520 is a modem for enabling wired or wireless communications between computer system 500 and an external network such as, but not limited to, the Internet. In one embodiment, I/O device 520 includes a transmitter. Computer system 500 may communicate with a network by transmitting data via I/O device 520. In accordance with various embodiments, I/O device 520 includes a microphone for receiving human voice or speech input (e.g., for use in a conversational or natural language interface).

Referring still to FIG. 5, various other components are depicted for computer system 500. Specifically, when present, an operating system 522, applications 524, modules 526, and data 528 are shown as typically residing in one or some combination of computer usable volatile memory 508 (e.g., RAM), computer usable non-volatile memory 510 (e.g., ROM), and data storage unit 512. In some embodiments, all or portions of various embodiments described herein are stored, for example, as an application 524 and/or module 526 in memory locations within RAM 508, computer-readable storage media within data storage unit 512, peripheral computer-readable storage media 502, and/or other tangible computer-readable storage media.

### EXAMPLE METHODS OF OPERATION

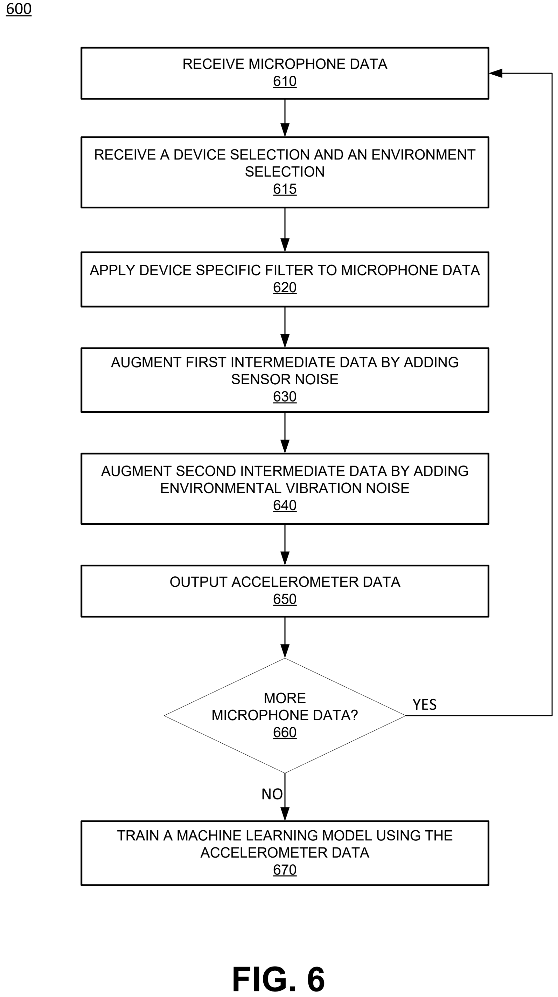

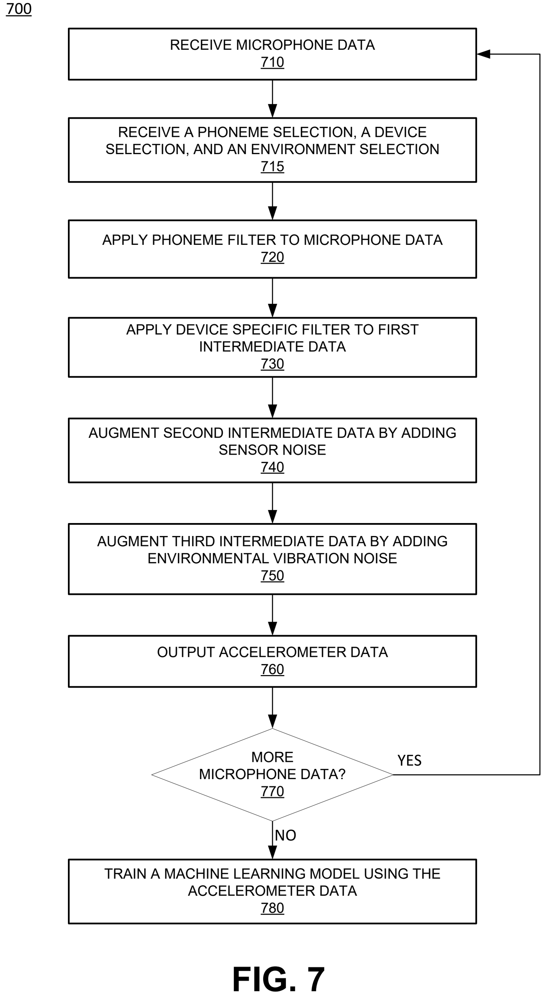

The following discussion sets forth in detail the operation of some example methods of operation of embodiments. With reference to FIGs. 6 and 7, flow diagrams 600 and 700 illustrate example procedures used by various embodiments. The flow diagrams include some procedures that, in various embodiments, are carried out by a processor under the control of computer-readable and computer-executable instructions. In this fashion, procedures described herein and in conjunction with the flow diagrams are, or may be, implemented using a computer, in various embodiments. The computer-readable and computer-executable instructions can reside in any tangible computer readable storage media. Some non-limiting examples of tangible computer readable storage media include random access memory, read only memory, magnetic disks, solid state drives/"disks," and optical disks, any or all of which may be employed with computer environments (e.g., computer system 500). The computer-readable and computer-executable instructions, which reside on tangible computer readable storage media, are used to control, or operate in conjunction with, for example, one or some combination of processors of the computer environments and/or virtualized environment. It is appreciated that the processor(s) may be physical or virtual or some combination (it should also be appreciated that a virtual processor is implemented on physical hardware). Although specific procedures are disclosed in the flow diagram, such procedures are examples. That is, embodiments are well suited for performing various other procedures or variations of the procedures recited in the flow diagram. Likewise, in some embodiments, the procedures in the flow diagrams may be performed in an order different than presented and/or not all the procedures described in the flow diagrams may be performed. It is further appreciated that procedures described in the flow diagrams may be implemented in hardware, or a combination of hardware with firmware and/or software provided by computer system 500.

FIG. 6 is a flow diagram 600 illustrating an example method for transforming microphone data into accelerometer data, according to embodiments. The method of flow diagram 600 is for transforming one or more instances of microphone data into accelerometer data. At procedure 610 of flow diagram 600, in instance of microphone data is received. At procedure 615, a device selection and an environment selection are received.

At procedure 620, a device-specific filter is applied to the microphone data to generate first intermediate data, the device-specific filter for transforming the microphone data according to characteristics of a device. In accordance with various embodiments, the characteristics of the device are associated with contact between the device and an ear canal of a user.

At procedure 630, the first intermediate data is augmented by adding sensor noise to the first intermediate data to generate second intermediate data, the sensor noise characterizing noise intrinsic to the device. In some embodiments, the sensor noise includes white noise.

At procedure 640, second intermediate data is augmented by adding environmental vibration noise to generate the accelerometer data, the environmental vibration noise defining an environment within which use of the device is simulated. In some embodiments, the environmental vibration noise simulates a user activity while using the device.

At procedure 650, accelerometer data is output. In some embodiments, the accelerometer data is stored, e.g., at simulated accelerometer data repository 240 of FIG. 2. At procedure 660, it is determined whether there are more instances of microphone data to transform. Provided there are more instances of microphone data to transform, flow diagram 600 returns to procedure 610 and receives the next instance of microphone data. In one embodiment, provided there are no more instances of microphone data to transform, flow diagram 600 ends.

In another embodiment, provided there are not more instances of microphone data to transform, at procedure 670, a machine learning model is trained for use within a device comprising an accelerometer for sensing vibration data (e.g., for use in condition-based monitoring) based on a plurality of instances of the accelerometer data (e.g., at machine learning training module 250 of FIG. 2 using simulated accelerometer data repository 240).

FIG. 7 is a flow diagram 700 illustrating an example method for transforming microphone data including speech into accelerometer data, according to other embodiments. The method of flow diagram 700 is for transforming one or more instances of microphone data including speech into accelerometer data. At procedure 710 of flow diagram 700, in instance of microphone data is received. At procedure 715, a phoneme selection, a device selection, and an environment selection are received.

At procedure 720, a phoneme filter is applied to the microphone data to generate first intermediate data, where the phoneme filter for transforming the microphone data according to at least a phoneme. In accordance with various embodiments, the phoneme filter further transforms the microphone data according to vowels and speech levels of a user.

At procedure 730, a device-specific filter is applied to the first intermediate data to generate second intermediate data, the device-specific filter for transforming the microphone data according to characteristics of a device. In accordance with various embodiments, the characteristics of the device are associated with contact between the device and an ear canal of a user.

At procedure 740, the second intermediate data is augmented by adding sensor noise to the second intermediate data to generate third intermediate data, the sensor noise characterizing noise intrinsic to the device. In some embodiments, the sensor noise includes white noise.

At procedure 750, third intermediate data is augmented by adding environmental vibration noise to generate the accelerometer data, the environmental vibration noise defining an environment within which use of the device is simulated. In some embodiments, the environmental vibration noise simulates a user activity while using the device.

At procedure 760, accelerometer data is output. In some embodiments, the accelerometer data is stored, e.g., at simulated accelerometer data repository 240 of FIG. 2. At procedure 770, it is determined whether there are more instances of microphone data to transform. Provided there are more instances of microphone data to transform, flow diagram 700 returns to procedure 710 and receives the next instance of microphone data. In one embodiment, provided there are no more instances of microphone data to transform, flow diagram 700 ends.

In another embodiment, provided there are not more instances of microphone data to transform, at procedure 780, a machine learning model is trained for use within a head-worn device comprising an accelerometer for sensing vibration data based on a plurality of instances of the accelerometer data (e.g., at machine learning training module 250 of FIG. 2 using simulated accelerometer data repository 240).

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the claims.

Reference throughout this document to "one embodiment," "certain embodiments," "an embodiment," "various embodiments," "some embodiments," or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without limitation.

The description includes the following clauses:
1. A method for transforming microphone data into accelerometer data, the method comprising:
   receiving the microphone data;
   applying a phoneme filter to the microphone data to generate first data, the phoneme filter for transforming the microphone data according to at least a phoneme;
   applying a device-specific filter to the first data to generate second data, the device-specific filter for transforming the first data according to characteristics of a device;
   augmenting the second data by adding sensor noise to the second data to generate third data, the sensor noise characterizing noise intrinsic to the device; and
   augmenting the third data by adding environmental vibration noise to generate the accelerometer data, the environmental vibration noise defining an environment within which use of the device is simulated.
2. The method of Clause 1, wherein the phoneme filter further transforms the microphone data according to vowels and speech levels of a user.
3. The method of Clause 1 or Clause 2, wherein the device is an in-ear microphone device.
4. The method of any of Clauses 1 to 3, wherein the characteristics of the device are associated with contact between the device and an ear canal of a user.
5. The method of any of Clauses 1 to 4, wherein the sensor noise comprises white noise.
6. The method of any of Clauses 1 to 5, wherein the environmental vibration noise simulates a user activity while using the device.
7. The method of any of Clauses 1 to 6, further comprising:
   receiving a phoneme filter selection, a device selection, an activity selection, and an environment selection for selecting the phoneme filter, the device-specific filter, the sensor noise, and the environmental vibration noise for generating the accelerometer data.
8. The method of any of Clauses 1 to 7, wherein the microphone data is received from a repository of the microphone data comprising a plurality of instances of the microphone data, optionally, wherein an instance of the microphone data comprises a keyword.
9. The method of Clause 8, wherein the receiving the microphone data comprises:
   receiving the plurality of instances of the microphone data from the repository of the microphone data, wherein the method is performed for each instance of the microphone data of the plurality of instances of the microphone data, such that a plurality of instances of the accelerometer data is generated.
10. The method of Clause 9, further comprising:
   training a machine learning model for use within a head-worn device comprising an accelerometer for sensing vibration data based on the plurality of instances of the accelerometer data.
11. A method for transforming microphone data into accelerometer data, the method comprising:
   receiving the microphone data;
   applying a device-specific filter to the microphone data to generate first data, the device-specific filter for transforming microphone first data according to characteristics of a device;
   augmenting the first data by adding sensor noise to the first data to generate second data, the sensor noise characterizing noise intrinsic to the device; and
   augmenting the second data by adding environmental vibration noise to generate the accelerometer data, the environmental vibration noise defining an environment within which use of the device is simulated.
12. The method of Clause 11, wherein the characteristics of the device are associated with contact between the device and a second device upon which the device is placed.
13. The method of Clause 11 or Clause 12, wherein the sensor noise comprises white noise.
14. The method of any of Clauses 11 to 13, wherein the environmental vibration noise simulates vibration noise within an environment in which the device is positioned.
15. The method of any of Clauses 11 to 14, further comprising:
   receiving a device selection and an environment selection for selecting the device-specific filter, the sensor noise, and the environmental vibration noise for generating the accelerometer data.
16. The method of any of Clauses 11 to 15, wherein the microphone data is received from a repository of the microphone data comprising a plurality of instances of the microphone data.
17. The method of Clause 16, wherein the receiving the microphone data comprises:
   receiving the plurality of instances of the microphone data from the repository of the microphone data, wherein the method is performed for each instance of the microphone data of the plurality of instances of the microphone data, such that a plurality of instances of the accelerometer data is generated.
17A. A (optionally non-transitory) computer readable storage medium having computer readable program code stored thereon for causing a computer system to perform the method of any of Clauses 1 to 17.
18. A (optionally non-transitory) computer readable storage medium having computer readable program code stored thereon for causing a computer system to perform a method for transforming microphone data into accelerometer data, the method comprising:
   receiving the microphone data;
   applying a phoneme filter to the microphone data to generate first data, the phoneme filter for transforming the microphone data according to at least a phoneme;
   applying a device-specific filter to the first data to generate second data, the device-specific filter for transforming the first data according to characteristics of an in-ear microphone device, wherein the characteristics of the in-ear microphone device are associated with contact between the in-ear microphone device and an ear canal of a user;
   augmenting the second data by adding sensor noise to the second data to generate third data, the sensor noise characterizing noise intrinsic to the in-ear microphone device; and
   augmenting the third data by adding environmental vibration noise to generate the accelerometer data, the environmental vibration noise defining an environment within which use of the in-ear microphone device is simulated.
19. The computer readable storage medium of Clause 18, wherein the microphone data is received from a repository of the microphone data comprising a plurality of instances of the microphone data, wherein an instance of the microphone data comprises a keyword.
20. The computer readable storage medium of Clause 19, wherein the receiving the microphone data comprises:
   receiving the plurality of instances of the microphone data from the repository of the microphone data, wherein the method is performed for each instance of the microphone data of the plurality of instances of the microphone data, such that a plurality of instances of the accelerometer data is generated.
21. The computer readable storage medium of Clause 20, the method further comprising:
   training a machine learning model for use within a head-worn device comprising an accelerometer for sensing vibration data based on the plurality of instances of the accelerometer data.

## Claims

1. A method for transforming microphone data into accelerometer data, the method comprising:
receiving the microphone data;
applying a phoneme filter to the microphone data to generate first data, the phoneme filter for transforming the microphone data according to at least a phoneme;
applying a device-specific filter to the first data to generate second data, the device-specific filter for transforming the first data according to characteristics of a device;
augmenting the second data by adding sensor noise to the second data to generate third data, the sensor noise characterizing noise intrinsic to the device; and
augmenting the third data by adding environmental vibration noise to generate the accelerometer data, the environmental vibration noise defining an environment within which use of the device is simulated.

2. The method of Claim 1, wherein the phoneme filter further transforms the microphone data according to vowels and speech levels of a user.

3. The method of Claim 1 or Claim 2, wherein the device is an in-ear microphone device.

4. The method of any of Claims 1 to 3, wherein the characteristics of the device are associated with contact between the device and an ear canal of a user.

5. The method of any of Claims 1 to 4, wherein the sensor noise comprises white noise.

6. The method of any of Claims 1 to 5, wherein the environmental vibration noise simulates a user activity while using the device.

7. The method of any of Claims 1 to 6, further comprising:
receiving a phoneme filter selection, a device selection, an activity selection, and an environment selection for selecting the phoneme filter, the device-specific filter, the sensor noise, and the environmental vibration noise for generating the accelerometer data.

8. The method of any of Claims 1 to 7, wherein the microphone data is received from a repository of the microphone data comprising a plurality of instances of the microphone data, wherein an instance of the microphone data comprises a keyword.

9. The method of Claim 8, wherein the receiving the microphone data comprises:
receiving the plurality of instances of the microphone data from the repository of the microphone data, wherein the method is performed for each instance of the microphone data of the plurality of instances of the microphone data, such that a plurality of instances of the accelerometer data is generated.

10. The method of Claim 9, further comprising:
training a machine learning model for use within a head-worn device comprising an accelerometer for sensing vibration data based on the plurality of instances of the accelerometer data.

11. A method for transforming microphone data into accelerometer data, the method comprising:
receiving the microphone data;
applying a device-specific filter to the microphone data to generate first data, the device-specific filter for transforming microphone first data according to characteristics of a device;
augmenting the first data by adding sensor noise to the first data to generate second data, the sensor noise characterizing noise intrinsic to the device; and
augmenting the second data by adding environmental vibration noise to generate the accelerometer data, the environmental vibration noise defining an environment within which use of the device is simulated.

12. The method of Claim 11, wherein the characteristics of the device are associated with contact between the device and a second device upon which the device is placed.

13. The method of Claim 11 or claim 12, wherein the sensor noise comprises white noise, and/or, wherein the environmental vibration noise simulates vibration noise within an environment in which the device is positioned.

14. The method of any of Claims 11 to 13, further comprising:
receiving a device selection and an environment selection for selecting the device-specific filter, the sensor noise, and the environmental vibration noise for generating the accelerometer data, and/or,
wherein the microphone data is received from a repository of the microphone data comprising a plurality of instances of the microphone data, optionally, wherein the receiving the microphone data comprises:
receiving the plurality of instances of the microphone data from the repository of the microphone data, wherein the method is performed for each instance of the microphone data of the plurality of instances of the microphone data, such that a plurality of instances of the accelerometer data is generated.

15. A computer readable storage medium having computer readable program code stored thereon for causing a computer system to perform the method of any preceding claim.
